# EUROPEAN PATENT APPLICATION

(11) **EP 1 092 376 A2**
(43) Date of publication of application: **18.04.2001**
(21) Application number: 00119524.7
(22) Date of filing: 07.09.2000
(51) Int. Cl.: A47J 31/06

(54) **Espresso coffee machine particularly for domestic use**

(30) Priority: 13.10.1999 IT MI992133
(71) Applicant: De' Longhi S.p.A., 31100 Treviso (IT)
(72) Inventor: De'Longhi, Guseppe, 31100 Treviso (IT)
(74) Representative: Rapisardi, Mariacristina

(57) **Abstract**

The espresso coffee machine particularly for domestic use, comprises a capsule-holder with handle for containing the coffee powder, adapted to be operatively connected to the boiler portion of the coffee machine wherein there occurs the dispensing of hot water for producing a coffee infusion, the capsule-holder with handle comprises sealing means that are mobile from a first upper position of said capsule-holder to at least one second position, substantially outside the profile of said capsule-holder, and vice versa.

## Description

The present finding relates to an espresso coffee machine particularly for domestic use.

As known, on the market there substantially exist three different types of espresso coffee machines for domestic use: those adapted to receive paper coffee capsules, those for stiff coffee capsules (of plastic or aluminium), and those adapted to receive the removable filters containing the coffee powder for one or more servings.

All of these machines exhibit a boiler with a filter for dispensing the hot water in a suitable form, according to whether in the capsule-holder with handle there is housed a capsule or a removable filter containing the coffee powder.

In fact, the different arrangement of the dispensing filter is indispensable for the purpose of optimising the infusion, that is to say, the passage of hot water through the coffee powder contained in the capsule or into the removable filter containing the same.

In particular, the optimisation of the infusion is obtained when the dispensing filter is in direct contact with the capsule or the coffee powder in the removable filter.

For these reasons, the seal between the edge of the capsule-holder with handle and the boiler portion of the machine wherein the hot water is dispensed is obtained thanks to a toroidal gasket arranged on the side of the boiler of the same.

This type of machine, as it can be understood from the above, exhibits several disadvantages among which the fact that, due to the different configuration of the dispensing filter, each type of machine exhibits a reduced flexibility of use.

For example, the machine with paper capsules is not capable of operating in an optimum way with stiff capsules or with the removable filters containing the coffee powder, and vice versa. Besides making the manufacture of the machines more complex from the production point of view (the shape of the dispensing filter changes according to the use), with an increase of the production and sales costs, this situation implies a significant difficulty when cleaning the dispensing filter, with all the consequences arising from this situation.

Another significant disadvantage is that in machines operating with paper capsules, once the infusion has occurred, they stick to the dispensing filter and remain in said position also when the user detaches the capsule-holder with handle from the machine. For the purpose of facilitating the detachment of the capsule by the user, tabs or other modifications have been realised on the latter which, however, besides complicating the realisation of the capsule, have not solved the above problem.

Moreover, it must also be borne in mind that in these machines the toroidal gasket engages with the edge of the capsule which, as a consequence of the partial rotation of the capsule-holder for its connection to the boiler, can also be torn, thus becoming unusable.

It is the object of the present finding that of eliminating the disadvantages of the prior art mentioned above.

Within this object, an important purpose of the finding is that of realising an espresso coffee machine, particularly for domestic use, which should be indifferently used with paper capsules of the stiff type, or with coffee powder contained into one or more-serving removable filters.

Another purpose of the finding is that of realising a coffee machine which, during the use of the capsules, should allow extracting the latter in an automatic way when disengaging the capsule-holder from the boiler.

A further purpose of the finding is that of realising a coffee machine which, besides exhibiting a great flexibility of use, should also be simplified ― from the structural point of view ― with respect to pre-existing machines, exhibiting in addition a considerable simplicity for cleaning the dispensing filter.

Last but not least, another purpose of the finding is that of realising a coffee machine wherein the capsule arranged into the capsule-holder is protected by the sealing gasket between the latter and the boiler, and only operates in compression, so as to be protected from any damage during the connection of the capsule-holder to the machine.

This object, as well as these and other purposes, are attained by an espresso coffee machine particularly for domestic use, comprising a capsule-holder with handle for containing the coffee powder, adapted to be operatively connected to the boiler portion of the coffee machine wherein there occurs the dispensing of hot water for producing a coffee infusion, characterised in that said capsule-holder with handle comprises sealing means that are mobile from a first upper position of said capsule-holder to at least one second position, substantially outside the profile of said capsule-holder, and vice versa.

Further features and advantages of the invention will appear more clearly from the description of a preferred but not exclusive embodiment of the espresso coffee machine according to the finding, illustrated as a non-limitative indication in the attached drawings, wherein:
- Figure 1 shows a partly sectioned side elevation view of the capsule-holder with handle to be connected to the filter of the coffee machine, not shown;
- Figure 2 shows a side elevation view of the capsule-holder with handle exhibiting mobile sealing means shifted from the first position to the second position according to the finding;
- Figures from 3 to 5 schematically show the various positions of the mobile sealing means when shifting from the first to the second position according to the finding.

With reference to the figures described above, the espresso coffee machine particularly for domestic use, partly represented and indicated with reference numeral 60, comprises a capsule-holder 2 with handle 3, indicated as a whole with reference numeral 1, adapted to contain coffee powder.

The capsule-holder with handle is operatively connected, in an in se known way, to the boiler portion of the coffee machine wherein there occurs the dispensing of hot water for producing the coffee infusion.

Advantageously, the capsule-holder 2 with handle 3 comprises sealing means, indicated as a whole with reference numeral 4, which is suitably mobile from a first upper position, which is substantially external to the profile of capsule-holder 2, and vice versa, by a sufficient amount for inserting the removable filters. Advantageously, the size of the capsule-holder is adapted to contain a stiff filter 20 for housing a coffee capsule, which can be of paper or of a stiff material, such as plastic or aluminium, or it can contain a removable stiff filter 21 and 22, adapted to house coffee powder for one or more servings.

The sealing means comprises an annular support 10 for holding a sealing ring, as a whole indicated with reference numeral 11, which projects outside of the support ring 10 so as to exhibit a first and a second face that are opposed to one another, indicated with 12 and 13.

In particular, when the sealing ring is in the first position, the first face 12 sealingly engages with the edge 14 of the stiff removable filters for one or more servings of infusion, or with the envelope of a capsule made of a stiff material.

The second face 13 of the sealing ring is adapted to engage with the portion 60 of the boiler wherein there occurs the dispensing of hot water for producing the coffee infusion.

In this way, the sealing ring 11 avoids the use of the toroidal sealing gasket present in the machines of the known type, and it allows indifferently using capsule-holder filters, or coffee-powder-holder filters, or even a stiff capsule, independently of the configuration of the machine boiler and of the dispensing filter present on the same.

In fact, the seal between the capsule-holder rim and the toroidal ring present at the circumference of the boiler is eliminated since a double seal is carried out directly on the edges of the filters or of the envelope of the stiff capsules, and the facing portion of the boiler or of the dispensing filter, consequently attaining the optimisation of the infusion since the latter is always in contact with the coffee powder.

Moreover, the dispensing filter 30 can be directly associated to the sealing ring 11 so as to facilitate, as already said, the cleaning of the same and of the machine, simplifying the structure of the same with the consequence of having, besides a considerable flexibility of use, also reduced production and marketing costs.

In particular, the sealing ring 11 is mobile from the first position to the second position in contrast for the action of elastic means, preferably a spring 15.

The rotation of the sealing ring can be, for example, by about 90 degrees, as shown in figure 5.

Moreover, the annular support 10 is associated to handle 3 or to the capsule-holder 2 through a coupling member 16, realised in such a way as to allow shifting the annular support 10, and thus the sealing ring 11, sidewards, and out of the profile of the capsule-holder 2.

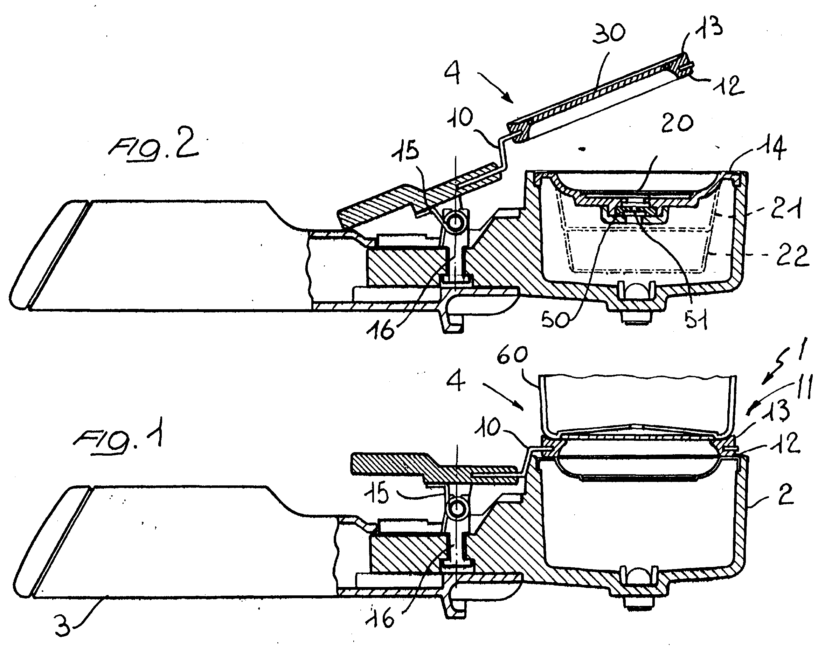

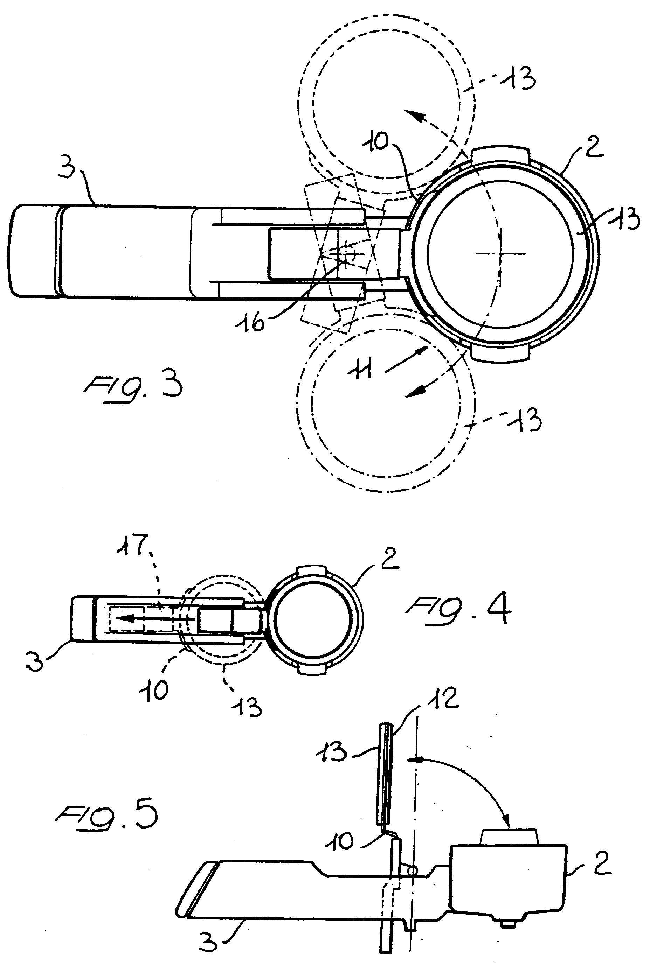

In this case, the coupling member is realised by a first hinging with rotation axis orthogonal to that one of the handle, so as to carry out ― as mentioned ― the shift of the sealing ring sidewards of the capsule-holder 2, as shown in figure 3. In a different embodiment, the coupling member 16 is defined by a first and a second hinging.

In this case, the first hinging exhibits a rotation axis coincident with the above rotation axis, whereas the second hinging exhibits a second rotation axis orthogonal to the first rotation axis, so as to allow the movement of the sealing ring 11 to the second position, that is to say, outside of the profile of the capsule-holder 2.

In a constructive alternative embodiment, the coupling member 16 is defined by a guide 17 (figure 4) which extends along the handle, and along which the sealing ring is made translate towards the outside of the profile of the capsule-holder 2, retracting along the extension of the handle.

The stiff filter 20, and the removable filter 21 and 22 exhibit on the bottom an insert 50 having a small bore 51 through which the coffee infusion is made pass so as to produce an increment of froth.

Thanks to the solution described above, once the capsule-holder has been grasped by handle 3, it is possible to bring the sealing ring 11 outside the profile of the capsule-holder 2 so as to introduce into the latter either the filter or the paper capsule or, according to the requirements, a capsule of stiff material or a removable filter for containing the coffee powder for one or more servings of coffee infusion.

Then, the sealing ring is moved back to the initial position so that its face 12 carries out the seal onto edge 14 of the filter or of the capsule of stiff material.

At this point, in an in se known way, the capsule-holder 2 is connected to the coffee machine so that the second face 13 of the sealing ring carries out a seal also with the boiler portion from which the hot water outflows.

After having carried out the infusion, the detachment of the capsule-holder 2 from the machine will automatically determine the detachment, for example, of the paper capsule thanks to the presence of the sealing ring, which holds it into its seat, thus preventing the capsule from remaining stuck to the lower portion of the boiler or of the dispensing filter of the same, as it often occurs.

In practise, it has been noted that the espresso coffee machine particularly for domestic use is especially advantageous as it exhibits a considerable flexibility of use, since for its operation the same can indifferently use paper capsules, or with envelope of stiff material, or also filters for containing one or more servings of coffee powder.

Moreover, the presence of the dispensing filter directly connected onto the sealing ring allows optimising the washing of the same, thus also optimising the cleaning of the members that are mainly subject to get dirty, guaranteeing a perfect hygiene in time.

The finding thus conceived can be subject to several variant changes, all falling within the scope of the inventive idea; moreover, all details can be replaced with technically equivalent elements.

In practice, the materials used, as well as the sizes, can be of any type according to the requirements and to the prior art.

## Claims

1. An espresso coffee machine particularly for domestic use, comprising a capsule-holder with handle for containing the coffee powder, adapted to be operatively connected to the boiler portion of the coffee machine wherein there occurs the dispensing of hot water for producing a coffee infusion, characterised in that said capsule-holder with handle comprises sealing means that are mobile from a first upper position of said capsule-holder to at least one second position, substantially outside the profile of said capsule-holder, and vice versa.

2. An espresso coffee machine according to claim 1, characterised in that said sealing means comprises a connection member with said handle or said capsule-holder adapted to bring them, in said second position, arranged on a side of said capsule holder.

3. An espresso coffee machine according to one or more of the preceding claims, characterised in that said sealing means is mobile from said first position to said second position against and by virtue of resilient means.

4. An espresso coffee machine according to one or more of the preceding claims, characterised in that said connection member has at least one first hinging with rotation axis orthogonal to that one of the handle for displacing said sealing means into said second position.

5. An espresso coffee machine according to one or more of the preceding claims, characterised in that said connection member has at least a first and a second hinging, said first hinging exhibiting a rotation axis orthogonal to that one of the handle for the partial displacement of said sealing means around said rotation axis and said second hinging exhibiting at least a second rotation axis orthogonal to said first rotation axis for the displacement of said sealing means into said second position.

6. An espresso coffee machine according to one or more of the preceding claims, characterised in that said connection member has at least one guide extending along said handle along which said sealing means translates to move into said second position.

7. An espresso coffee machine according to one or more of the preceding claims, characterised in that said capsule-holder has a suitable size so as to contain a stiff filter for housing a coffee capsule, made of paper or a stiff filter, adapted to house coffee powder for one or more servings or the envelope of a capsule made of a stiff material.

8. An espresso coffee machine according to one or more of the preceding claims, characterised in that said sealing means comprises an annular support for holding a sealing ring, which exhibits a first and a second face that are opposed to one another, whereby in said first position, said first face engages with the edge of saidff filters or with the envelope of a capsule made of a stiff material.

9. An espresso coffee machine according to one or more of the preceding claims, characterised in that said second face of the sealing ring is adapted to engage with the said portion of the boiler wherein there occurs the dispensing of hot water for producing the coffee infusion.

10. An espresso coffee machine according to one or more of the preceding claims, characterised in that said sealing ring replaces the sealing toroidal gasket of said portion of the boiler wherein there occurs the dispensing of hot water.

11. An espresso coffee machine according to one or more of the preceding claims, characterised in that said dispensing filter of said boiler is associated to said sealing ring.

12. An espresso coffee machine according to one or more of the preceding claims, characterised in that said stiff filters have an insert having a small bore for enhancing the production of froth in the coffee infusion.
